Europäisches Patentamt

European Patent Office

Office européen des brevets

(19)

(11) Veröffentlichungsnummer: **0 687 540 A1**

## (12) EUROPÄISCHE PATENTANMELDUNG

(21) Anmeldenummer: **94109420.3**

(22) Anmeldetag: **17.06.94**

(51) Int. Cl.⁶: **B29C 45/17**

(43) Veröffentlichungstag der Anmeldung:
**20.12.95 Patentblatt 95/51**

(84) Benannte Vertragsstaaten:
**AT CH DE FR IT LI NL**

(71) Anmelder: **STAUBLI & TRUMPELT GmbH MASCHINENFABRIK**
**Theodor-Schmidt-Strasse 19**
**D-95448 Bayreuth (DE)**

(72) Erfinder: **Böhm, Georg**
**Kellerstrasse 5a**
**D-91281 Kirchenthumbach (DE)**

(74) Vertreter: **Grünecker, Kinkeldey, Stockmair & Schwanhäusser Anwaltssozietät**
**Maximilianstrasse 58**
**D-80538 München (DE)**

### (54) Aufspannvorrichtung

(57) Die Erfindung betrifft eine Aufspannvorrichtung für eine Spritzgießmaschine zur lösbaren Befestigung von Formteilen an Aufspannplatten mit einem entweder an den Aufspannplatten oder den Formteilen vorgesehenen Profilteil (50) und einem an dem jeweils anderen Körper vorgesehen Spannelement (10) mit gegen das Profilteil beweglichen Eingriffsteilen, die mit dem Profilteil in Eingriff bringbar sind. Es ist Aufgabe der Erfindung, eine Aufspannvorrichtung für eine Spritzgießmaschine zu schaffen, bei der auf einfache und schnelle Weise Formwerkzeuge an den Aufspannplatten der Spritzgießmaschine angebracht werden können. Erfindungsgemäß wird diese Aufgabe dadurch gelöst, daß die Eingriffsteile einen oder mehrere mit dem Profil des Profilteils (50) in Eingriff bringbare längliche Träger (17) aufweisen, und daß ein längs der Träger verschiebbares Verriegelungsteil (24) vorgesehen ist, mit dem die Träger im Eingriff mit dem Profilteil festlegbar sind.

FIG.1

EP 0 687 540 A1

Die vorliegende Erfindung betrifft eine Aufspannvorrichtung für eine Spritzgießmaschine zur lösbaren Befestigung eines Formteils an einer Aufspannplatte mit einem entweder an dem Formteil oder der Aufspannplatte vorgesehenen Profilteil und einem an dem jeweils anderen Teil vorgesehenen Spannelement mit gegen das Profilteil beweglichen Eingriffsteilen, die mit dem Profilteil in Eingriff bringbar sind.

Bei Spritzgießmaschinen wird zwischen zwei einander gegenüberliegenden Aufspannplatten ein auswechselbares Spritzgießwerkzeug gehalten. Eine Aufspannvorrichtung für eine Spritzgießmaschine ist beispielsweise aus der deutschen Patentanmeldung DE-A-29 38 665 bekannt. Die dort bekannte Aufspannvorrichtung besitzt eine Aufspannplatte mit einer Einstecköffnung für einen an dem Formteil vorgesehenen vorstehenden Flansch. Innerhalb der Einstecköffnung sind zwei radial verschiebbare, einander gegenüberliegende Spannbacken vorgesehen, die den eingeschobenen Flansch hintergreifen. Die Spannbacken können mittels eines Hydraulikaggregats hydraulisch verschoben werden. Zum Aufspannen des Formteils wird der Flansch in die Einstecköffnung der Aufspannplatte eingefügt und durch die hydraulisch betriebenen Spannbacken hintergriffen und festgelegt.

Bei Spritzgießmaschinen besteht allgemein das Betreben, eine einfach zu handhabende und dennoch exakt justierende Aufspannvorrichtung vorzusehen, mit der ein Werkzeugwechsel auf schnelle und einfache Weise möglich ist. Es ist weiter von besonderer Bedeutung, daß die Aufspannvorrichtung ein hohes Maß an Kompatibilität für verschiedene Spritzgießwerkzeuge mit unterschiedlichen Werkzeuggrundplatten ermöglicht. Weitere bekannte Aufspannsysteme, bei denen mehrere Spannpratzen die Kanten der Werkzeuggrundplatte zum Anspannen hintergreifen, weisen Einschränkungen bezüglich ihrer Kompatibilität für unterschiedliche Werkzeuge auf. Bisher ist es bekannt, zur Behebung dieser Einschränkungen Adapterplatten zu verwenden, die jedoch einen erheblichen Kostenaufwand beinhalten.

Es ist die Aufgabe der vorliegenden Erfindung, eine gegenüber dem Stand der Technik verbesserte Aufspannvorrichtung für eine Spritzgießmaschine zu schaffen, die eine schnelle und paßgenaue Anbringung von Formteilen an Aufspannplatten ermöglicht.

Erfindungsgemäß wird diese Aufgabe gelöst durch eine Aufspannvorrichtung der eingangs genannten Art, die sich dadurch auszeichnet, daß die Eingriffsteile einen oder mehrere mit dem Profil des Profilteils in Eingriff bringbare längliche Träger aufweisen, und daß ein längs der Träger verschiebbares Verriegelungsteil vorgesehen ist, mit dem die Eingriffsteile im Eingriff mit dem Profilteil festlegbar sind.

Da ein Verriegelungsteil vorgesehen ist, um die Eingriffsteile im Eingriff mit dem Profilteil festzulegen, ist eine sichere Verbindung der Formteile an den Aufspannplatten gewährleistet. Die Verbindung der beiden Teile läßt sich auf einfache Weise herstellen. Dazu werden die Formteile bzw. die Aufspannplatten senkrecht zur Richtung der Aufspannplatten gegeneinander bewegt, bis die Eingriffsteile dem Profil gegenüberliegen, die anschließend durch eine Bewegung des Verriegelungsteils in dieser Stellung arretiert werden. Bei nur geringem Kraftaufwand zum Verschieben des Verriegelungsteils läßt sich eine Verbindung mit hoher Schließkraft herstellen. Es sind keine komplizierten und umständlichen Bewegungen der miteinander zu verbindenden Teile erforderlich.

In einer vorteilhaften Weiterbildung sind die Träger quer zu ihrer Längsrichtung auslenkbar, und eine Querauslenkung ist quer zur Bewegungsrichtung des Verriegelungsteils gerichtet. Dadurch kann die Mechanik zur Bewegung des Verriegelungsteils für eine vergleichsweise niedrige Kraftbeaufschlagung durch das Aufspannen ausgelegt sein, da wesentlich höhere Kräfte, die beim Aufspannen an den Eingriffsteilen auftreten können, nur quer zur Bewegungsrichtung des Verriegelungsteils übertragen werden können und daher von dem Material des Verriegelungsteils aufgenommen werden.

Gemäß einer weiteren vorteilhaften Weiterbildung der Erfindung sind die Träger elastisch verformbar ausgebildet. Die federnde Eigenschaft der Träger schafft den Vorteil, daß auf einfache Weise eine Bewegung der Eingriffsteile möglich ist, ohne daß beispielsweise Gelenkvorrichtungen notwendig sind. Dadurch wird eine einfache und kostensparende Bauweise des Spannelements erzielt. In besonders vorteilhafter Weise sind die elastisch verformbaren Träger derart ausgebildet, daß sie bei Eingriff in das Profil des Profilteils in einem biegespannungsfreien Zustand sind. Dadurch sind die Träger mit einer höheren Haltekraft beaufschlagbar, da keine Überlagerung einer Biegespannung zusätzlich zu einer Zugspannung in den Trägern auftritt. Andererseits können dadurch die Träger entsprechend dünner dimensioniert sein.

Gemäß einer weiteren vorteilhaften Weiterbildung der Erfindung weist das Verriegelungsteil und/oder das Eingriffsteil derart ausgebildete Gleitflächen auf, daß eine Bewegung des Verriegelungsteils eine Auslenkung der Eingriffsteile quer zur Bewegungsrichtung des Verriegelungsteils bewirkt. Dadurch werden insbesondere elastisch deformierbare Träger durch ein Verschieben des Verriegelungsteils in die Arretierstellung ausgelenkt und in Eingriff mit dem Profil gebracht und gleichzeitig in ihrer Lage in dem Profil festgelegt.

Gemäß einer weiteren vorteilhaften Weiterbildung ist eine zwischen dem Verriegelungteil und den Eingriffsteilen in Richtung einer gegenseitigen Verschiebung wirkende Federvorrichtung vorgesehen, wobei die Federvorrichtung vorteilhafterweise so angeordnet ist, daß sie gegen die arretierende Stellung des Kolbens vorgespannt ist. Dadurch wird eine Selbsthemmung bewirkt, die ein Lösen der Verbindung ohne aktive Betätigung des Verriegelungselements ausschließt.

In einer weiteren Ausführungsform sind an dem Verriegelungteil und den Eingriffsteilen in einer Verriegelungsstellung aneinander angrenzende Reibflächen derart vorgesehen, daß das Verriegelungteil in der Verriegelungsstellung durch eine zwischen den Reibflächen wirkende Reibungskraft sperrbar ist. Dadurch wird ebenfalls eine das Lösen des Eingriffs unterbindende Selbsthemmung der Bewegung des Verriegelungsteils bewirkt, ohne daß beispielsweise eine Vorspannung durch eine zusätzliche Federvorrichtung notwendig wäre.

In einer weiteren vorteilhaften Weiterbildung der Erfindung sind das Spannelement und/oder das Profilteil gegeneinander verschiebbar. Dadurch wird ermöglicht, sowohl das Spannelement in einer Aufspannplatte als auch das Profilteil an einem Formteil jeweils so zu integrieren, daß in einem zurückgezogenen Zustand des Spannelements bzw. des Profilteils keine über die einander gegenüberliegenden Oberflächen der Aufspannplatte und des Formteils vorspringenden Teile vorhanden sind. Zum Herstellen des Eingriffs der an den länglichen Trägern des Spannelements vorgesehenen Eingriffsteile ist das Profil des Profilteils wird, ausgehend von der zurückgezogenen Stellung, das Spannelement bzw. das Profilteil gegeneinander verschoben, bis die Eingriffsteile dem Profil des Profilteils gegenüberliegen. Diese Ausführungsform weist den großen Vorteil auf, daß aufgrund der glatten gegenüberliegenden Flächen der Aufspannplatte und des Formteils ohne jegliche vorstehende Teile ein wesentlich vereinfachtes Manövrieren, insbesondere von schweren Formteilen, ermöglicht wird.

In einer weiteren besonders vorteilhaften Weiterbildung ist die erfindungsgemäße Aufspannvorrichtung hydraulisch betätigbar. Dies schafft den Vorteil einer einfach zu bewerkstelligenden Automatisierung des Aufspannvorgangs, wodurch eine Vereinfachung und Beschleunigung mit einhergehender Kosteneinsparung für das Aufspannen von Werkzeugteilen an einer Spritzmaschine erzielt wird.

Weitere vorteilhafte Ausführungsformen gehen aus den Unteransprüchen hervor.

Im folgenden wird die Erfindung anhand zeichnerisch dargestellter Ausführungsbeispiele unter Bezugnahme auf die Zeichnungen näher erläutert und beschrieben. In den Zeichnungen zeigen:

Fig.1    eine Querschnittsansicht einer ersten Ausführungsform der erfindungsgemäßen Aufspannvorrichtung in einer entriegelten Stellung;

Fig.2    eine Querschnittsansicht der in der Fig. 1 gezeigten Ausführungsform in der verriegelten Stellung;

Fig.3    eine Ansicht des Spannelements der Aufspannvorrichtung von der Seite des Profilteils;

Fig.4    eine Querschnittsansicht einer zweiten Ausführungsform der Erfindung in der entriegelten Stellung;

Fig.5    eine Querschnittsansicht der in Fig. 4 gezeigten Ausführungsform in der verriegelten Stellung;

Fig.6    eine Querschnittsansicht einer weiteren Ausführungsform der Erfindung in der entriegelten Stellung;

Fig.7    eine Querschnittsansicht der in der Fig. 6 gezeigten Ausführungsform in der verriegelten Stellung;

Fig.8-10    Schemaskizzen zur Erläuterung des möglichen Eingriffs der Eingriffsteile in das Profil der Profilteile;

Fig.11    eine vereinfachte Querschnittsansicht eines Teils eines Spannelements einer weiter abgewandelten Aufspannvorrichtung;

Fig.12    eine vereinfachte teilweise Querschnittsdarstellung einer weiteren, handbetätigbaren Ausführungsform der Aufspannvorrichtung;

Fig.13    eine vereinfachte Querschnittsdarstellung eines Teilbereichs einer abgewandelten, handbetätigbaren Ausführungsform der erfindungsgemäßen Aufspannvorrichtung;

Fig.14    eine Weiterbildung der in der Fig. 4 gezeigten Ausführungsform in der entriegelten, nicht eingreifenden Stellung; und

Fig.15    die in der Fig. 14 gezeigte Ausführungsform in der eingreifenden und verriegelten Stellung.

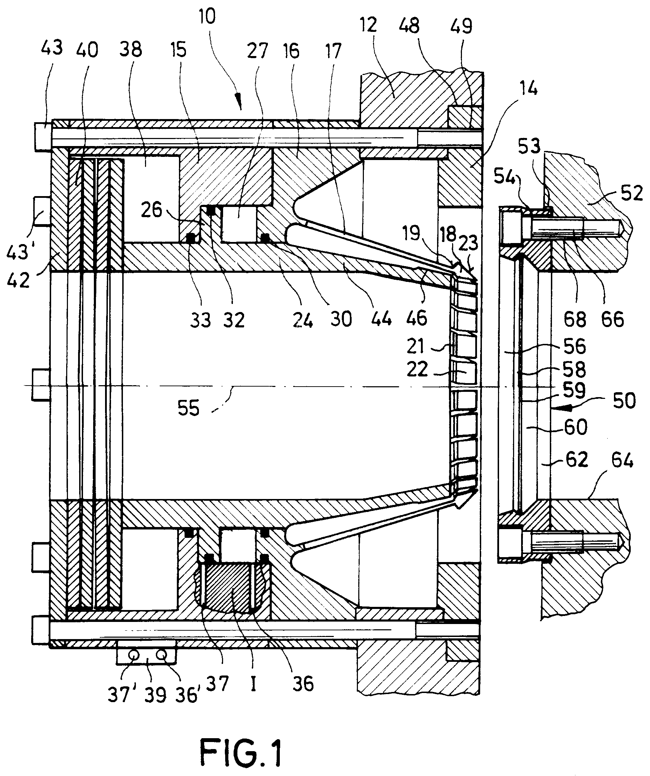

Die Fig. 1 zeigt eine Ausführungsform einer erfindungsgemäßen Aufspannvorrichtung mit einem an einer Aufspannplatte 12 angebrachten Spannelement 10, das mit einem an einem Formteil 52 angebrachten Profilteil 50 verbindbar ist.

Das Profilteil 50 besteht aus einem Aufspannring 54, der in seiner innenliegenden Fläche 62 ein aus den ringförmigen, zueinander geneigten Teilflächen 56, 58, 59 und 60 bestehendes Profil aufweist, das in der Art einer nach außen weisenden Nut ausgebildet ist. Der Aufspannring 54 ist mittels einer Schraubverbindung 66 in einer entsprechenden, mit einem Gewinde versehenen Bohrung 68 des Formteils 52 befestigt. Ein Außendurchmesser 54 des Aufspannrings 50 ist spielfrei in eine an dem Formteil 52 angebrachte Zentrierbohrung 53 eingefügt.

Das Spannelement 10 weist eine Vielzahl von relativ dünnen, elastisch verformbaren länglichen Trägern in Form von einseitig gehalterten, freitragenden Armen 17 auf, an deren Enden als Eingriffselemente in das Profil des Aufspannrings 50 dienende Haken 18 vorgesehen sind. Anstelle von Haken könnten auch Einkerbungen an den Armen vorgesehen sein, wobei eine Anpassung des Profils des Aufspannrings mit Ausbildung eines entsprechenden Vorsprungs notwendig wäre. Die Arme 17 stehen mit einem Ringkörper 16 in Verbindung, wobei der Ringkörper 16 an seiner zum Aufspannring weisenden Stirnseite an die Aufspannplatte 12 und an seiner gegenüberliegenden Seite an einen weiteren ringförmigen Spannelementkörper 15 angrenzt. Die Arme 17 können dabei integral mit dem Ringkörper 16 durch gemeinsame Fertigung aus einem Werkstück verbunden sein. Andererseits könnten die Arme 17 einzeln gefertigt sein und durch Löten oder Schweißen oder mittels einer Schraub- oder Gelenkverbindung an dem Ringkörper 16 angebracht sein. Weiter könnten auch der Ringkörper 16 und der Spannelementkörper 15 aus einem einzigen Teil bestehen.

Mittels einer Schraubverbindung 43 sind der Ringkörper 16 und der Spannelementkörper 15 an der Aufspannplatte 12 befestigt. In der gezeigten Ausführungsform sind der Spannelementkörper 15 und der Ringkörper 16 zwischen der Aufspannplatte 12 und einer Endplatte 42 konzentrisch zu einer Zentrierbohrung 48 eines an der Aufspannplatte vorgesehenen Zentrierrings 14 durch die Schraubverbindung 43 angebracht.

An dem Ringkörper 16 sind die Arme 17 derart ausgebildet, daß sie gemeinsam einen im wesentlichen konisch sich verjüngenden Hohlzylinder bilden. Die an den Enden der freitragenden Arme vorgesehenen Haken weisen eine nach innen vorspringende, schräg gegen die Innenoberfläche der Arme 17 ansteigende Gleitfläche 21 auf, auf die eine im wesentlichen wieder entlang der Richtung der Arme ausgebildete Anlagefläche 22 folgt. An der der innenliegenden Anlagefläche 22 gegenüberliegenden außenliegenden Seite weisen die Haken 18 eine nach außen vorspringende, schräg gegen die Längsrichtung der Arme 17 verlaufende Reibfläche 19 auf. Auf diese Reibfläche 19 folgt eine weitere Fläche 23, die zusammen mit der gegenüberliegenden Anlagefläche 22, zum Beispiel eine Spitze bildet. Es ist offensichtlich, daß das Ende des Hakens 18 anstelle einer Spitze auch eine andere Form aufweisen kann. Der Haken 18 ist entsprechend dem Profil des Profilteils 50 ausgebildet.

Innerhalb des Ringkörpers 16 und des aus den Armen 17 gebildeten konischen Zylindermantels ist ein in einer axialen Richtung senkrecht zur Oberfläche der Aufspannplatte beweglicher zylindrischer Kolben 24 vorgesehen. Der Kolben 24 weist an seiner den Armen zugewandten Seite einen sich verjüngenden Abschnitt 44 auf. Am Ende des Abschnitts 44 ist eine Gleitfläche 46 ausgebildet. Der Außendurchmesser am Ende des sich verjüngenden Bereichs 44 des Kolbens 24 liegt zwischen dem inneren und dem äußeren Durchmesser einer gedachten Ringfläche, die durch die an den Haken ausgebildeten Gleitflächen 21 bestimmt wird. In einem mittleren Bereich weist der Kolben 24 zwischen zwei Gleitbereichen eine Ringschulter 26 auf. Zwischen der Ringschulter 26, dem ringförmigen Spannelementkörper 15 und dem Ringkörper 16 ist eine Kammer 27 ausgebildet. An der Innenseite des Ringkörpers 16 und der Innenseite des Spannelementkörpers 15 sowie auf der Außenseite der Ringschulter 26 sind an den entsprechenden Gleitflächen jeweils Dichtringe 30, 33 und 32 vorgesehen. In die Kammer 27 münden zwei Kanäle 36 und 37, die mit an einem Anschlußteil 39 vorgesehenen Leitungsanschlüssen 36' und 37' in Verbindung stehen. Die Kammer 27 wird dabei durch die Ringschulter 26 in zwei Teilkammern unterteilt, die jeweils mit einem der Fluidkanäle 36 und 37 in Verbindung stehen. Die Kanäle 36 und 37, die nicht in der Schnittebene gemäß der Fig. 1 verlaufen, sind durch die in der Fig. 1 gezeigte Aufbrechung I veranschaulicht.

Zwischen dem Spannelementkörper 15 und der Endplatte 42 wird eine weitere Kammer 38 gebildet. In der Kammer 38 ist eine Tellerfeder 40 vorgesehen, die zwischen der Endplatte 42 und der gegenüberliegenden Stirnfläche des Kolbens 24 wirkt. In der in Fig. 1 gezeigten Stellung befindet sich die Tellerfeder 40 im vorgespannten Zustand. Anstelle einer Tellerfeder wären auch Schrauben-, Biege- oder Schenkelfedern möglich.

In der in Fig. 1 gezeigten Stellung des Kolbens 24, bei der die Tellerfeder 40 vorgespannt ist, befindet sich die stirnseitige Außenkante am sich verjüngenden Ende der Gleitfläche 46 in einer Position, in der sie den an den Haken ausgebildeten Gleitflächen 21 gegenüberliegt. Dies ist die entarretierte Stellung der an den Armen 17 vorgesehenen Haken 18. Die Arme 17 sind in dieser Position nicht deformiert.

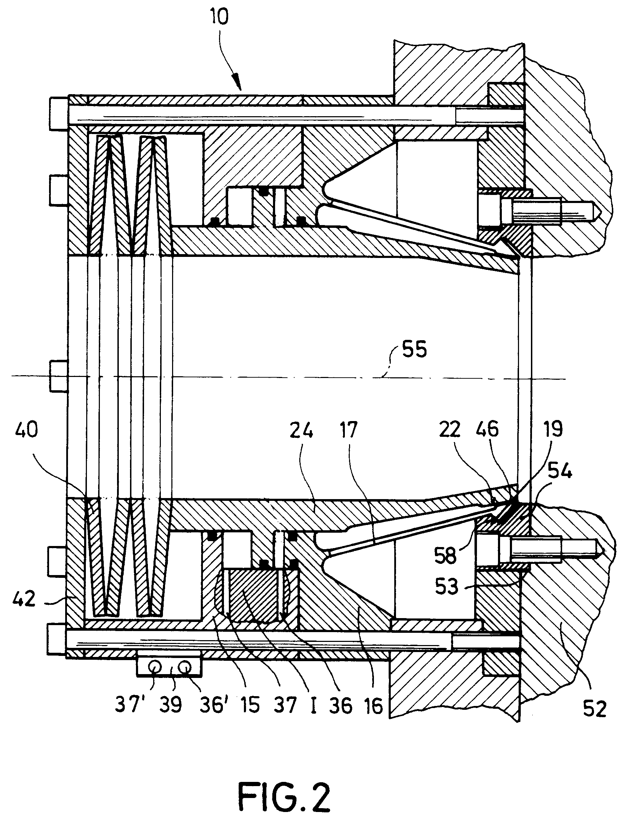

In der in der Fig. 2 gezeigten zweiten Stellung des Spannelements nach der Fig. 1 befindet sich die Federvorrichtung 40 in einem teilweise entspannten Zustand, wobei der Kolben 24 in axialer Richtung 55 gegenüber dem in der Fig. 1 gezeigten Zustand versetzt angeordnet ist. Die konische Gleitfläche 46 am Endbereich des sich verjüngenden Abschnitts 44 des Kolbens 24 liegt an den Anlageflächen 22 der Haken 18 an.

In der in der Fig. 2 gezeigten Stellung ist das Profilteil 50 in eine in der Haltescheibe 14 ausgebildeten Zentrierausnehmung eingefügt. Die Haken 18 des Spannelements 10 greifen in das Profil des Profilteils 50 ein. Dabei liegt die Reibfläche 19 an der gegenüberliegenden Fläche 58 des Profils an. Zwischen der Hakenfläche 23 und der gegenüberliegenden Profilfläche 60 des Profilteils 50 ist vorzugsweise ein geringer Luftspalt ausgebildet. Das an den Haken 18 anschießende Ende des Arms 17 sollte ebenfalls nicht an der konisch sich gegen das Spannelement ausweitetenden Innenfläche 56 des Profilteils anliegen, um ein permanentes Nachspannen der Eingriffsteile in dem Profil durch die anstehende Federkraft auf den Kolben zu ermöglichen.

Die Form und die gegenseitige Auslegung der Reibflächenpaare 19 und 58 sowie 46 und 22 ist so gewählt, daß ein formschlüssiges spielfreies Halten des Profilteils 50 in der Ausnehmung des Zentrierrings 14 erzielt wird. Die Form der Haken, insbesondere der Gleitflächen 21, ist in Abhängigkeit vom Außendurchmesser der Gleitfläche 46 so gewählt, daß eine geeignete Spreizung der Arme bei axialer Verschiebung des Kolbens 24 auftritt, um die formflüssige Festlegung des Profilteils zu erzielen.

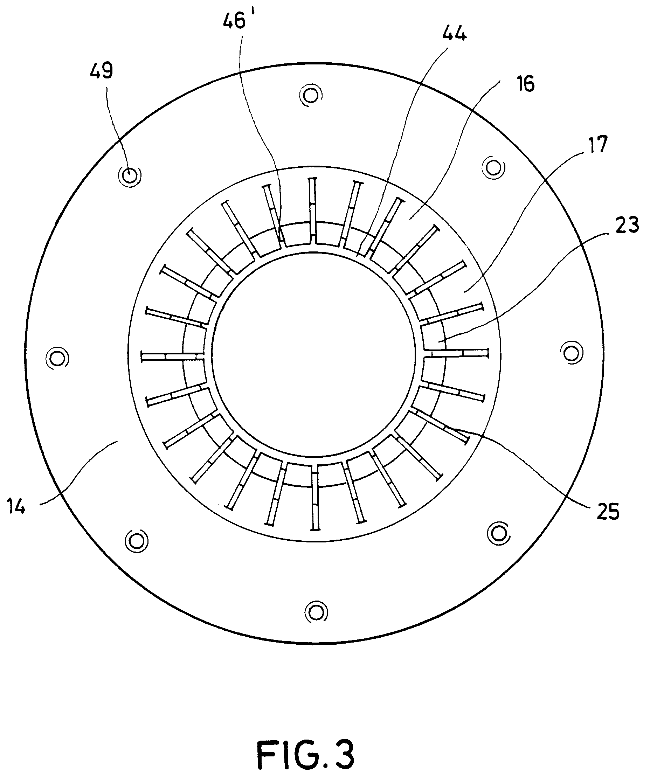

In der Fig. 3 ist eine Ansicht des Spannelements 10 von der Seite des Profilteils gezeigt. Die Elemente des Spannelements 10 weisen Rotationssymmetrie bezüglich der Achse 55 auf. Die Arme 17 sind durch eine entsprechende Anzahl von radialen Einschnitten 25 in einer konischen Zylindermantelfläche gebildet, die an dem Ringkörper 16 ausgebildet ist. An dem Zentrierring 14 sind mit einem Innengewinde versehene Bohrungen 49 vorgesehen, an denen die Schraubverbindungen 43 zur Befestigung des Spannelements 10 an der Aufspannplatte 12 angebracht werden. Der Ringkörper und die Arme 17 mit den daran vorgesehenen Eingriffshaken 18 sind als Drehteil auf einfache Weise herstellbar, wobei nur zur Ausbildung der Arme radiale Einschnitte in den Ringkörper 16 durchzuführen sind. Das Spannelement 10 wie auch das Profilteil 54 weisen eine zentrale, axiale Durchgangsöffnung auf. Diese Durchgangsöffnung ermöglicht eine Durchführung z.B. einer Druckleitung für die Gießmasse, die in das Formteil einzuspritzen ist.

Zur Erläuterung des Betriebs der erfindungsgemäßen Aufspannvorrichtung wird wieder Bezug genommen auf die Figuren 1 und 2. In einem entspannten und arretierenden Zustand der Aufspannvorrichtung befindet sich der Kolben 24 des Spannelements 10 in einer Stellung, in der die Gleitfläche 46 des Kolbens 24 an den Anlageflächen 22 der Haken anliegt. Die Federvorrichtung 40 ist in diesem Zustand teilweise entspannt. Die an dem äußeren Umfang des Kolbens 24 ausgebildete Ringschulter 26 teilt die Kammer 27 in zwei Teilkammern auf, in die jeweils ein Flüssigkeitskanal 36 bzw. 37 mündet. Diese Stellung des Kolbens 24 bezüglich der Arme und Haken ist in der Fig. 2 dargestellt. Zum Lösen der Befestigung des Profilteils 50 bzw. zum Herstellen einer solchen Befestigung wird der Kolben 24 in die in der Fig. 1 gezeigte Stellung unter Vorspannung der Federvorrichtung 40 durch Druckbeaufschlagung der Kammer 27 über den Kanal 36 bewegt. Die Druckbeaufschlagung kann z.B. durch Öffnen eines in den Zeichnungen nicht dargestellten Ventils und Einspeisen einer unter Druck stehenden Hydraulikflüssigkeit erfolgen. In dieser Stellung ist das konische Ende des Kolbens 24 gegen die Haken 18 der Arme 17 zurückversetzt, die sich dadurch in ihrer kraftfreien Normalstellung befinden. In dieser kraftfreien Normalstellung ist der maximale Außendurchmesser der Haken, der an der Kante zwischen den Teilflächen 19 und 23 auftritt, kleiner als der minimale Innendurchmesser des Profils des Aufspannrings 50, der an der Kante zwischen den Flächen 56 und 58 vorliegt. Dadurch ist ein widerstandsloses Einführen bzw. Entnehmen des Aufspannrings entlang der Richtung der Achse 55 möglich. Durch die Eigenelastizität der Arme 17 kehren die Arme 17 und die daran angebrachten Haken 18 bei Zurückziehen des Kolbens 24 selbsttätig in die nichteingreifende, ein widerstandsloses Einführen bzw. Entnehmen des Aufspannrings ermöglichende Stellung zurück. Dies hat einerseits den Vorteil, daß keinerlei Vorrichtungen notwendig sind, um eine den Eingriff freigebende Stellung der Arme bei zurückgezogenem Kolben 24 herzustellen. Andererseits besteht jedoch der Nachteil, daß sich in der Eingriffsstellung zu einer eventuellen Zugspannung in den Armen 17 eine Biegespannung aufgrund der Auslenkung durch den Kolben 24 in die Eingriffsstellung überlagert. Dadurch ist die insgesamte axiale Haltekraft der Arme 17 entsprechend verringert. Wenn die Arme 17 aus einem einzigen Werkstück integral mit dem Ringkörper 16 gefertigt sind, ist es notwendig, die Haken 18 in der ausgelenkten Eingriffsstellung nachzubearbeiten, um eine Anpassung der Flächen an den Haken 18 in der ausgelenkten Eingriffsstellung an die Gegenfläche in dem Profil des Profilteils 50 zu erzielen.

Um eine feste Verbindung zwischen der Aufspannplatte 12 und dem Formteil 52 herzustellen, werden die Haken 18 in Eingriff mit dem Profil des Aufspannrings 50 gebracht. Dazu wird die Druckbeaufschlagung in der Kammer 27 beendet, so daß die Vorspannung der Federvorrichtung 40 den Kolben 24 entlang der Achse 55 in Richtung des Aufspannrings 50 verschiebt. Dabei trifft zunächst die äußere Endkante des konischen Bereichs 46 des Kolbens 24 auf die Gleitflächen 21 der Haken 18. Unter der Vorspannkraft der Federvorrichtung 40 werden die elastisch verformbaren Arme 17 nach außen ausgelenkt, bis die Endkante des konischen Bereichs 46 über die Gleitfläche 21 sich unter gleichzeitiger Spreizung der Arme 17 bewegt hat. Eine schlüssige Verbindung wird schließlich erzielt, wenn die weitere axiale Bewegung des Kolbens 24 zu einer letztlich jegliches Spiel ausgleichenden Einstellung der Reibflächenpaare 46 und 22 sowie 19 und 58 führt. Die an die Haken 18 anschließenden Bereiche der Arme 17 liegen nicht an der konisch sich erweiternden Ringfläche 56 des Aufspannrings 15 an, um ein permanentes Nachspannen zu ermöglichen. Durch die elastische Verformbarkeit der Arme 17 und die entsprechende Formgebung der Haken 18 und der Arme 17 ist es möglich, daß sich die Haken auf eventuell vorhandene Winkelfehler in den Reibflächenpaaren 46 und 22 bzw. 19 und 58 einstellen können.

Da der Aufspannring 50 in die Zentrierausnehmung der Haltescheibe 14 eingefügt ist, ist eine Sicherung des Aufspannrings 50 gegen das Spannelement 10 nur in der Richtung der Achse 55 erforderlich. Eine auf das Formteil 52 und somit auf den Aufspannring 50 wirkende axiale Zugkraft führt zu einer an den Gleitflächen 19 und 58 entstehenden radial nach innen wirkenden Kraftkomponente und zu einer axialen Kraftkomponente. Aufgrund der Verriegelung durch den an den innenliegenden Auflageflächen 22 mit seiner Gleitfläche 46 anliegenden Kolben 24 wird ein Ausweichen der Haken 18 nach innen verhindert. Die axialen Zugkräfte werden von den Armen 17 aufgenommen. Die relativ großen radialen Kräfte, die in den Reibflächen der Haken 18 auftreten, können problemlos durch die massive Ausführung des Kolbens 24 aufgenommen werden. Die gewählte Ausführung, bei der in der entarretierten Stellung die Federvorrichtung 40 vorgespannt ist, führt zu einer Selbsthemmung für die Verriegelung, da eine aktive Druckbeaufschlagung erforderlich ist, um den Kolben 24 von den gespreizten Haken 18 wegzubewegen. Sobald die Druckbeaufschlagung entfällt, treibt die Federvorrichtung 40 selbsttätig den Kolben 24 in die Verriegelungsstellung. Damit entfällt die Gefahr, daß bei eventuellem Versagen einer das Spannelement betätigenden Hydraulik ein ungewolltes Lösen der Befestigung erfolgt.

Ein ähnlicher Effekt der Selbsthemmung könnte andererseits durch entsprechende Auslegung der Reibflächenpaare 46 und 22 erreicht werden. Dazu wäre es notwendig, daß die Reibfläche des Reibflächenpaars 46 und 22 gegen die Verschiebungsrichtung des Verriegelungselements einen derart kleinen Winkel einschließt, daß die zwischen den Reibflächen wirkende Reibungskraft das Verriegelungsteil in einer Verriegelungsstellung sperrt. Dazu muß die Bedingung

$$\alpha < \arctan \mu$$

erfüllt sein, wobei $\alpha$ der von der Reibfläche und der Bewegungsrichtung des Verriegelungsteils eingeschlossene Winkel und $\mu$ der Reibwert der Reibflächen ist. Bei Verwenden von Stahl für beide Reibflächen 46 und 22 beträgt der Winkel $\alpha$ ca. 6°. Da in diesem Fall eine die Selbsthemmung bewirkende Feder, die gegen den verriegelten Zustand vorgespannt ist, entfällt, ist es andererseits notwendig, ein Betätigen des Kolbens 24 in beiden Richtungen, beispielsweise durch Versehen der Fluidkammer 27 mit zwei Kanälen, zu ermöglichen.

Die in den Figuren gezeigte Auslegung der Reibflächenpaare 19 und 58 bzw. 46 und 22 erleichtert zudem wesentlich das Öffnen eines längere Zeit unter Selbsthemmung stehenden Spannelements.

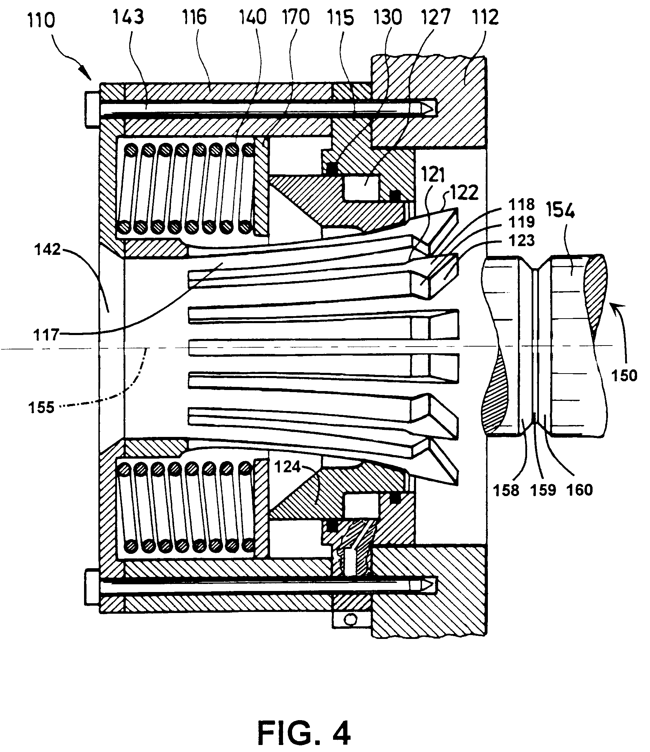

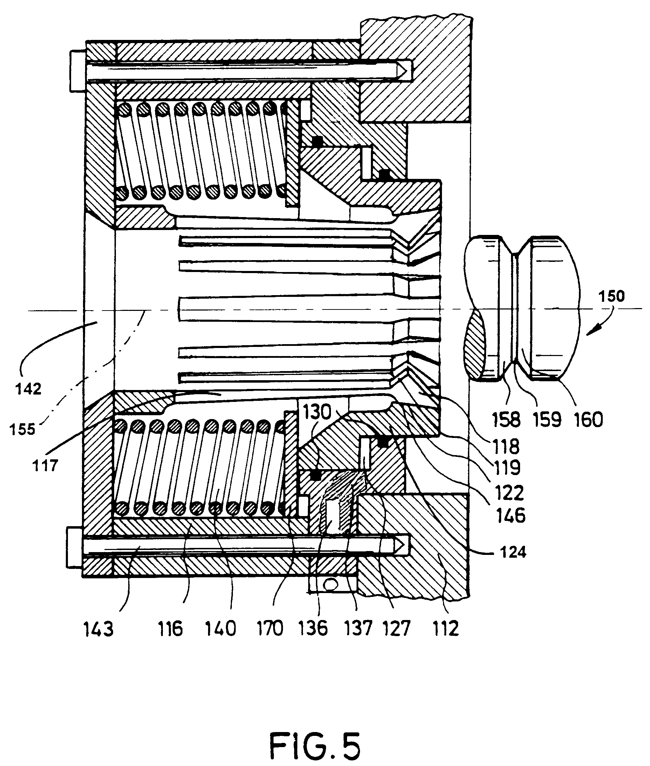

In den Figuren 4 und 5 ist eine weitere Ausführungsform der erfindungsgemäßen Aufspannvorrichtung gezeigt. Die Aufspannvorrichtung umfaßt ein Spannelement 110 und einen an dem Spannelement befestigbaren Spannbolzen 150. Das Spannelement ist über eine Verschraubung 143 an einer Aufspannplatte 112 angebracht. Der Spannbolzen ist entlang einer Achse 155 ausgerichtet und an seiner äußeren Oberfläche ist ein Profil in der Form einer Nut vorhanden, das aus den aufeinanderfolgenden und gegeneinander geneigten Ringflächen 158, 159 und 160 aufgebaut ist. Das Spannelement 110 weist einen entlang der Achse 155 vorgesehenen Hohlraum auf, in den der Spannbolzen 150 einfügbar ist. An einem Ringkörper 116 sind im wesentlichen entlang der Achse ausgerichtete längliche Träger bzw. Arme 117 vorhanden, an deren freiem Ende Haken 118 vorgesehen sind. Aufgrund ihrer länglichen, relativ schlanken Ausführungsform sind die Arme 117 elastisch deformierbar. Die Arme 117 sind so angeordnet, daß sie im wesentlichen einen in axialer Richtung geschlitzten Hohlzylinder bestimmen.

Die Haken 118 enthalten eine auf die Innenfläche der Arme folgende, einen Winkel damit einschließende Reibfläche 119, die den Haken im wesentlichen die nach innen vorstehende Hakenform verleiht. Die anschließende Auflagefläche 123 schließt mit der Reibfläche 119 einen Winkel ein. Gegenüberliegend zu der durch die Fläche 119 und 123 gebildeten Hakenform ist anschließend an den Arm 117 eine Gleitfläche 121 ausgebildet, auf die eine Anlagefläche 122 folgt. Ein hohler Kolben 124 ist so angeordnet, daß die Arme 117 umgeben werden. Der Kolben 124 ist in axialer Richtung verschiebbar. Die äußere Mantelfläche des Kolbens 124 besteht aus zwei geradzylindrischen Gleitflächen mit unterschiedlichem Durchmesser, zwischen denen eine Ringschulter ausgebildet ist. Der Ringschulter des Kolbens 124 gegenüberliegend ist ein äußeres, ringförmiges Spannelementteil 115 angeordnet, das an seinen inneren Zylinderwänden zwei geradzylindrische Gleitflächen mit unterschiedlichem Durchmesser aufweist, die eine Ringschulter bilden. Die Gleitflächen an dem ringförmigen Spannelementteil 115 und dem Kolben 124 bilden ein Gleitlager. Zwischen den Ringschultern ist eine Kammer 127 ausgebildet, die mit einem unter Druck stehenden Medium über einen Kanal 137 und eine Anschlußbohrung 136 beaufschlagbar ist. An den Gleitflächen des ringförmigen Spannelementteils 115 sind Dichtringe 130 zu beiden Seiten der Kammer 127 vorgesehen.

Der Kolben 124 weist an dem den Haken 118 zugewandten Ende in seiner inneren Wandfläche eine konisch sich aufweitende Reibfläche 146 auf.

An dem gegenüberliegenden Ende ist eine Druckplatte 170 angeordnet, die die Kraft von zwischen einer Abschlußplatte 142 und der Druckplatte 170 vorgesehenen Federn 140 auf den Kolben 124 überträgt. Die Federn sind so angeordnet, daß sie bei Bewegung der Druckplatte 170 in Richtung der Endplatte 142 vorgespannt werden. Die Federn sind vorzugsweise Spiralfedern, deren Drahtdicke größer ist als der maximale Windungsabstand, so daß beim Auftreten eines Windungsbruches der Draht nicht zwischen die Windungen eintreten kann. Da sich somit beim Auftreten eines Windungsbruchs die beiden Bruchstücke nicht ineinanderschrauben können, wird dadurch ein Ausfall der Federfunktion derartiger Druckfedern verhindert, wenn unbemerkte Federbrüche auftreten sollten. Vorteilhafterweise sind mehrere Federn symmetrisch um die Achse 155 angeordnet. Es könnten auch ineinandergeschachtelte Federn verwendet werden.

In der Fig. 5 ist das in der Fig. 4 gezeigte Spannelement in einer Stellung gezeigt, in der der Kolben 124 axial in Richtung des Spannbolzens 150 verschoben ist, wodurch die Reibfläche 146 an der inneren Oberfläche des Kolbens 124 zur Anlage an der Anlagefläche 122 der Haken 118 kommt. In dieser Stellung sind die Arme 117 entgegen ihrer elastischen Federkraft nach innen ausgelenkt, so daß die durch die innenliegenden Hakenenden bestimmte lichte Weite der Gesamtheit der Haken gegenüber der Stellung nach der Fig. 4 verringert ist. Die Anordnung des Kolbens 124 und der Arme mit den daran vorgesehenen Haken 118 ist so bemessen, daß in der in der Fig. 4 gezeigten freien Stellung der Innendurchmesser der stirnseitigen Innenkante des Kolbens kleiner ist als der Außendurchmesser eines gedachten Kreisrings, der durch die aufeinanderfolgenden ansteigenden Gleitflächen 121 an den Haken 118 bestimmt ist. Somit trifft bei Verschiebung des Kolbens in axialer Richtung die innenliegende stirnseitige Kante des Zylinderkolbens auf die Gleitflächen 121 der Haken 118, die dadurch zusammen mit den Armen 117 radial nach innen ausgelenkt werden.

In der Fig. 4 ist die Aufspannvorrichtung in dem Zustand gezeigt, bei dem der Kolben 124 den Eingriff der Haken 118 freigibt und somit der Spannbolzen 150 widerstandsfrei in das Spannelement 110 einfügbar bzw. entnehmbar ist. Dabei sind die Arme 117 in der den Eingriff freigebenden Stellung in einem nicht ausgelenkten, biegespannungsfreien Zustand. Somit kehren die Arme 117 bei Zurückziehen des Kolbens 124 selbsttätig in diese den Eingriff freigebende Stellung zurück. Andererseits wäre es wie bei der vorhergehenden Ausführungsform auch hier denkbar, die Arme derart auszubilden, daß sie in der Eingriffsstellung in einem nicht ausgelenkten biegespannungsfreien Zustand sind. Bei Entarretierung durch Zurückziehen des Kolbens 124 würden in diesem Fall die Arme 117 nicht in die den Eingriff freigebende Stellung ausweichen, wodurch zum Entnehmen bzw. Einführen des Spannbolzens eine Kraft aufgewendet werden müßte, um die Arme zu spreizen. Andererseits würden in diesem Fall die Arme eine größere Belastung für eine in Richtung der Arme wirkende Zugkraft ermöglichen, da in der Eingriffsstellung keine zusätzliche Biegespannung überlagert ist. Außerdem wäre es nicht erforderlich, die Arme in der Eingriffsstellung nachzubearbeiten, um eine Anpassung der Flächen der Haken 118 an das Profil des Spannbolzens 150 vorzunehmen.

Wie in der Ausführungsform gemäß den Figuren 1 und 2 ist auch in der Ausführungsform gemäß den Figuren 4 und 5 eine Selbsthemmung für die Entarretierung des Spannelements aufgrund der permanent anstehenden Federkraft durch die Federn 140 vorhanden. Zur Entriegelung der Haken in dem Spannelement ist in der in den Figuren 4 und 5 gezeigten Ausführungsform eine Druckbeaufschlagung der Kammer 127 erforderlich, um aktiv den Kolben 124 gegen die Kraft der Feder 140 zu verschieben.

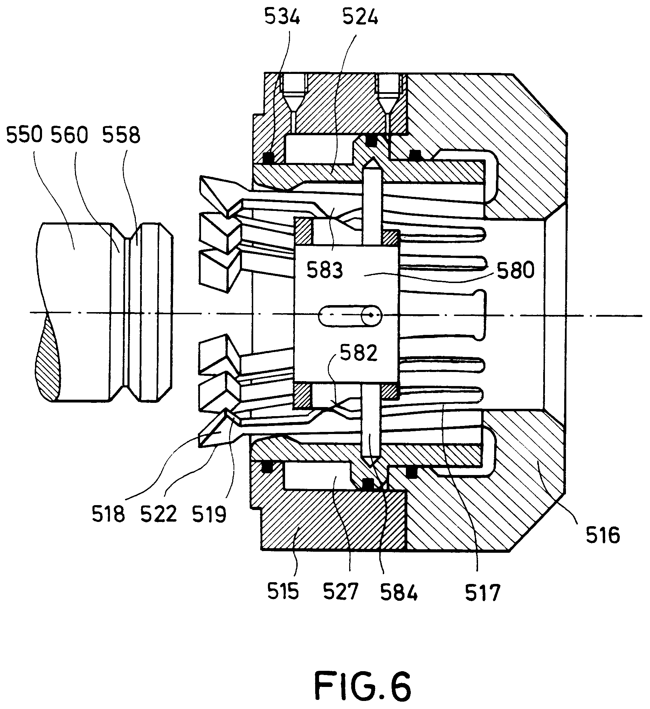

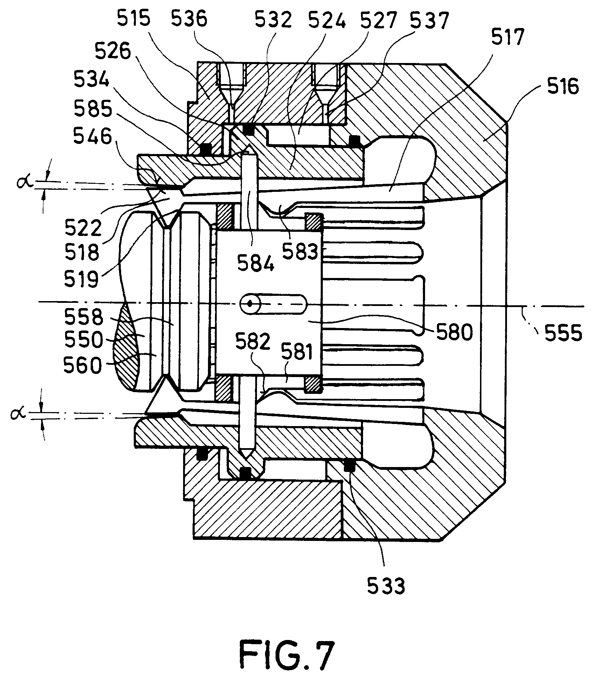

In Figuren 6 und 7 ist eine weitere Ausführungsform der erfindungsgemäßen Aufspannvorrichtung im Querschnitt für eine den Eingriff freigebende, entriegelte, bzw. eine verriegelte Stellung gezeigt. Wie bei den vorherigen Ausführungsformen ist bei der in der Figur 6 gezeigten Ausführungsform ein Spannbolzen 550 mit zueinander geneigten Ringflächen 558 und 560 versehen, die eine Nut bilden, in die an elastisch verformbaren länglichen Träger bzw. Armen 517 ausgebildete Haken 518 eingreifen können. In der gezeigten Ausführungsform sind die an einem Ringkörper 516 vorgesehenen Arme 517 derart ausgebildet, daß sie in der in der Figur 6 gezeigten, den Eingriff freigebenden Stellung unter Beaufschlagung mit einer Biegespannung radial ausgelenkt sind, um eine zwischen den innen liegenden Hakenenden auftretende lichte Weite zu schaffen, die größer ist als der Außendurchmesser des Spannbolzens, um ein widerstandsloses Einführen bzw. Entnehmen des Spannbolzens zu ermöglichen. Zum Spreizen der Arme 517 in dieser entarritierten Stellung ist eine Rückzugsvorrichtung vorgesehen, die eine mit dem Verriegelungselement in Form eines Kolbens 524 über Mitnehmerstifte 584 betätigte Innenbuchse 580, die entlang der Richtung des Kolbens 524 verschiebbar ist, umfaßt. Zwischen der Innenbuchse 580 und dem Kolben 524 sind die Arme 517 angeordnet. Die in Bohrungen 585 in dem Kolben 524 angebrachten Mitnehmerstifte 584 erstrecken sich in längs der Verschiebungsrichtung der Innenbuchse 580 ausgebildete Langlöcher 581. Die Innenbuchse 580 weist an ihrem Außendurchmesser eine schräg ansteigende Ringschulter 582 auf. Die Arme 517 weisen zusätzlich nach innen vorstehende Vorsprünge 583 auf, die bei Bewegung der Innenbuchse 580 entlang einer axialen Richtung 555 an der Ringschulter 582 auf- bzw. abgleiten. Eine mit einem unter Druck stehenden Fluid beaufschlagbare Kammer 527 weist in dieser Ausführungsform zwei an den jeweiligen axialen Enden der Kammern mündende Kanäle 536 und 537 auf, die jeweils mit einer Gewindebohrung für eine Druckleitung in Verbindung stehen. Bei Druckbeaufschlagung über jeweils einen der beiden Kanäle 536, bzw. 537 ist somit eine Verschiebung des Kolbens 524 in den jeweiligen Richtungen entlang der Achse 555 in die verriegelte und die freigebende Position möglich.

In der Figur 7 ist diese weitere Ausführungsform in der Eingriffsstellung gezeigt, in der an den Haken 518 ausgebildete Reibflächen 519 an der entsprechenden gegenüberliegenden Reibfläche 558 des Spannbolzens 550 anliegen. Die Arme 517 sind in dieser Eingriffsstellung in einem biegespannungsfreien Zustand.

Eine Druckbeaufschlagung der Kammer 527 über den Kanal 536 unter gleichzeitiger Freigabe des Kanals 537 führt zu einer Verschiebung des Kolbens 524 aus der in der Figur 7 gezeigten Stellung in die entarretierte Position nach der Figur 6, wobei über die Mitnehmerstifte 584 zugleich die Innenbuchse 580 verschoben wird. Dabei gleiten die Vorsprünge 583 an den Armen 517 an der Ringschulter 582 der Innenbuchse 580 auf, wodurch die Arme 517 nach außen gespreizt werden. Durch die Ausbildung von Langlöchern 581, in die die Stifte 584 eingreifen, ist eine kompaktere, in axialer Richtung kürzere Bauweise der Innenbuchse 580 möglich.

Eine Rückzugsvorrichtung für die Haken wäre auch bei einer Ausführungsform gemäß den Fig. 1 und 2 denkbar.

In der in Figur 7 dargestellten Ausführungsform sind an den Haken 518 und dem Kolben 524 ausgebildete, in der Eingriffsstellung aneinander anliegende Reibflächen 522 und 546 derart ausgebildet, daß ein zwischen dieser gemeinsamen Anlage- bzw. Reibfläche und der Verschiebungsrichtung des Kolbens 524 gebildeter Winkel $\alpha$ so klein ist, daß eine Selbsthemmung des Verriegelungselements in der arretierten Stellung bei Zugbeanspruchung auftritt. Aufgrund des kleinen Winkels $\alpha$ ist eine in axialer Richtung wirkende Komponente der Reibungskraft an den Reibflächenpaaren 522 und 546 größer als eine aufgrund des Winkels $\alpha$ auf den Kolben 524 wirkende axiale Kraft bei Zugbeanspruchung des Spannbolzens gegen das Spannelement. Um eine derartige Selbsthemmung zu ermöglichen, ist es notwendig, daß der Winkel $\alpha$ kleiner ist als der arctan $\mu$, wobei $\mu$ der Reibwert des Reibflächenpaares 522 und 546 ist. Bei einem beiderseits aus Stahl bestehenden Reibflächenpaar beträgt dieser für die Selbsthemmung maximal erlaubbare Winkel $\alpha$ ca. 6°.

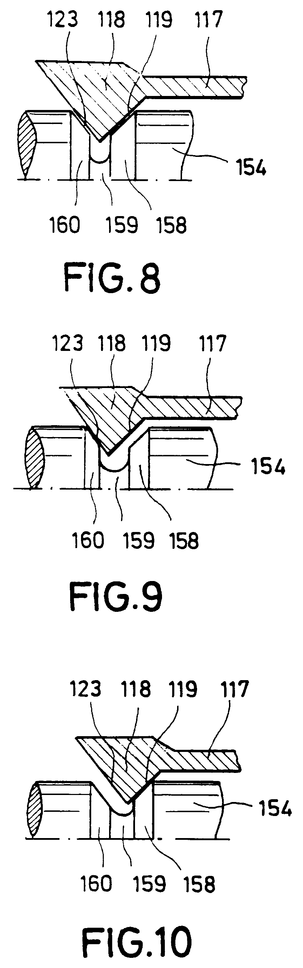

In den Figuren 8 bis 10 sind die verschiedenen Arten des Eingriffs der Haken 118 in das Profil des Spannelements 150 dargestellt. In der Figur 8 ist ein formschlüssiger Eingriff der Haken 118 in das Profil des Spannbolzens 154 gezeigt, der jedoch den Nachteil aufweist, daß ein selbsttätiges Nachspannen bei einem derartigen formschlüssigen Eingriff nicht möglich ist. Ein derartiger spielfreier Eingriff wäre insbesondere für eine Gestängekupplung geeignet.

Demgegenüber sind die in den Figuren 9 und 10 gezeigten Eingriffsformen vorteilhaft, da hier ein permanentes Nachspannen bei einem in die arretierte Stellung vorgespannten Kolben 124 auftritt. Dadurch erfolgt ein automatischer Ausgleich von Fertigungstoleranzen, oder eventuell während des Gebrauchs auftretenden Verschleißerscheinungen. Je nach Anordnung der Haken relativ zu dem Profil im Spannbolzen kann eine vom Spannelement weggerichtete Klemmkraft (Fig. 9) oder eine zum Spannelement hingerichtete Klemmkraft (Fig. 10) erzielt werden. Durch die Formgebung der Arme 117 und der Haken 118 ist eine elastische Verformung bei Anbringen der nach innen wirkenden Druckkraft durch den Kolben 124 möglich, die zu einer Anpassung der korrespondierenden Reibflächen 119 und 158 bzw. 123 und 160 bei eventuell zwischen diesen auftretenden Winkelfehlern führen kann.

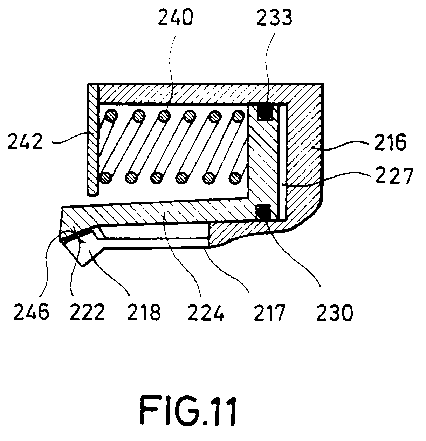

In der Fig. 11 ist schematisch eine Abwandlung des in der Fig. 4 gezeigten Spannelements dargestellt. In dieser Ausführungsform wirkt eine Feder 240 zwischen einer Endplatte 242 und einem an einem zylindrischen Kolben 224 ausgebildeten Ringflansch. An den äußeren und inneren zylindrischen Gleitflächen eines Ringflansches sind Dichtringe 230 und 233 angeordnet. Zwischen dem Ringflansch und einem Ringkörper 216, an dem die Arme 217 vorhanden sind, ist wieder eine Kammer 227 ausgebildet, in die ein unter Druck stehendes Medium einleitbar ist. Bei Druckbeaufschlagung der Kammer 227 ist der Kolben 224 entgegen der Federkraft der Feder 240 in Richtung der Arme 217 verschiebbar. In dem in der Fig. 11 gezeigten arretierten Zustand liegt eine Gleitfläche 246, die in der inneren Mantelfläche mit einer Neigung zur axialen Richtung ausgebildet ist, an einer entsprechenden Auflagefläche 222 an den Haken 218 an. Die Gleitflächen 246 und die Auflagefläche 222 sind in der gezeigten Ausführungsform so ausgebildet, daß, entgegen zu den vorher beschriebenen Ausführungsformen, eine Einwärtsbewegung des Kolbens 224 zu einer Auslenkung der Arme 217 und einer Verriegelung der Haken führt. Eine Auswärtsbewegung des Kolbens 224 führt zu einer Entriegelung und Freigabe der Haken 218, die sich durch die elastische Verformungskraft der Arme 217 nach außen (in der Zeichnung der Fig. 11 nach oben) bewegen, um die durch die nach innen vorstehenden Haken bestimmte lichte Weite zur widerstandsfreien Ein- und Ausführung eines Spannbolzens zu vergrößern. Auch hier wäre eine Ausführung der Arme 217 derart möglich, daß sie sich in der Eingriffsstellung in einem spannungsfreien Zustand befinden. Wieder tritt durch die Kraft der Feder 240 Selbsthemmung auf. Selbsthemmung kann auch hier durch die im vorhergehenden beschriebene geeignete Ausführung der Reibflächenpaare erfolgen.

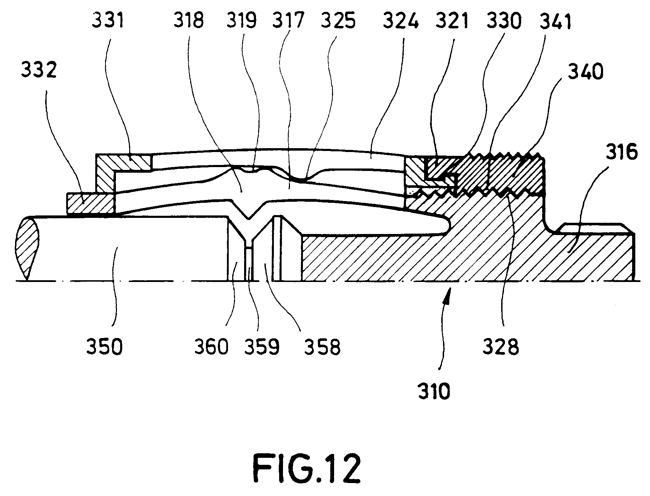

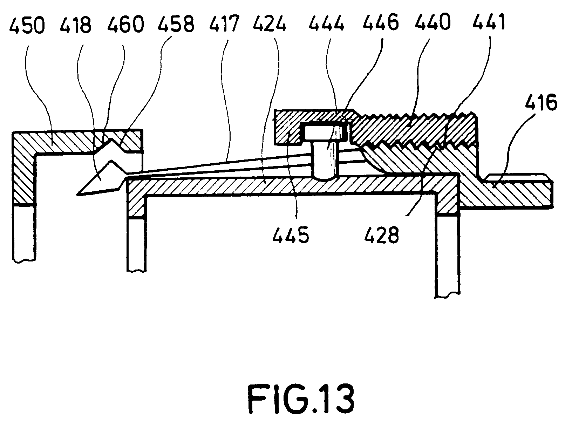

In den Figuren 12 und 13 sind weitere Ausführungsbeispiele für eine erfindungsgemäße Aufspannvorrichtung gezeigt, die Vorrichtungen für eine Handbetätigung aufweisen.

Die in der Fig. 12 im Querschnitt schematisch teilweise gezeigte Aufspannvorrichtung umfaßt einen Spannbolzen 350, an dem ein durch die Ringflächen 358, 359 und 360 gebildetes nutförmiges Profil vorhanden ist. Dem Spannbolzen 350 liegt ein Spannelement 310 gegenüber, an dem elastisch deformierbare längliche Hakenträger 317 an einem Spannelementkörper 316 vorhanden sind. Obwohl in der Fig. 12 nur ein Hakenträger gezeigt ist, ist zweckmäßigerweise, wie in den vorhergehenden Ausführungsformen, eine Vielzahl von Hakenträgern vorgesehen, die zylindersymmetrisch zur Achse in Längsrichtung angeordnet sind. Die Hakenträger 317 weisen in einem mittleren Bereich in einer der Nut des Spannbolzens 350 gegenüberliegenden Position einen nach innen vorstehenden Vorsprung 318 auf, der zum Eingriff in die Nut am Spannbolzen 350 mit geeigneten Flächen ausgebildet ist. Der Eingriffsvorsprung 318 ist etwa in einem mittleren Bereich der Hakenträger 317 ausgebildet. Die freien Enden der Hakenträger 317 greifen in einen Ringkörper 332 ein, wobei der Ringkörper 332 einen Innendurchmesser aufweist, der an den Außendurchmesser des Spannbolzens 350 angepaßt ist. Die Hakenträger könnten auch derart aus einem hohlzylindrischen Körper ausgeschnitten sein, daß ein integral mit den Hakenträgern gebildeter Ringkörper an dem freien Ende verbleibt. Die Innenoberfläche des Ringkörpers 332 wirkt zusammen mit den freien Enden der Hakenträger als Führung zum Einführen des Spannbolzens 350 in das Spannelement 310. Weiter wirkt das Ringelement 332 als Auflager für das abstehende Ende der Hakenträger 317. An den Hakenträgern 317 ist an einer dem Eingriffsvorsprung 318 gegenüberliegenden Position ein Höcker 319 vorhanden, an dem eine Arretiermulde vorgesehen sein kann.

Die Hakenträger 317 außen umgreifend ist eine geschlitzte Arretierbuchse 324 vorgesehen, an der ein innenliegender Ringwulst 325 ausgebildet ist. Durch die geschlitzte Ausführung ist die Arretierbuchse im Bereich des Ringwulsts 325 elastisch deformierbar. Der Ringwulst 325 ist in seiner Form und Größe an den Höcker 319 am Hakenträger 317 angepaßt. Die Arretierbuchse 324 stützt sich an ihrem einen Ende an dem Ringkörper 332 ab. Das andere Ende der Arretierbuchse 324 ist mit einer Überwurfmutter 340 über gegenseitig zueinander hakenförmig gebogene axiale Fortsätze 321 und 330 im Reibungseingriff. Die Überwurfmutter 340 weist ein Innengewinde 341 auf, das in Eingriff mit einem an dem Spannelementkörper 316 ausgebildeten Außengewinde 328 steht. Die Überwurfmutter 340 ist in gleitendem Reibungseingriff mit der Arretierungsbuchse 324.

Ein Drehen der Überwurfmutter 340 führt gemäß der Gewindesteigung zu einer Verschiebung in axialer Richtung, wobei die mitgenommene Arretierbuchse 324 ebenfalls axial verschoben wird. Dadurch wandert der Wulst 325 entlang den Hakenträgern 317 zu dem Höcker 319, was zu einer Auslenkung der Arme 317 nach innen führt. Durch die elastische Deformierbarkeit der Arretierbuchse ist ein sicherer Eingriff und ein Einrasten der Höcker in der Ringwulst möglich. Außerdem wird dadurch ein Ausgleich für Fertigungstoleranzen geschaffen. Durch diese Auslenkung der Hakenträger 317 wird der Eingriffsvorsprung 318 in Eingriff mit der in dem Spannbolzen 350 ausgebildeten Nut gebracht.

Eine weitere Ausführungsform der erfindungsgemäßen Aufspannvorrichtung mit Handbetätigung ist in der Fig. 13 gezeigt.

Ein Profilteil 450 umfaßt einen Hohlzylinderabschnitt, in dessen innerer Oberfläche eine aus den Ringflächen 458 und 460 gebildete Nut vorhanden ist. Der Nut liegt wie bei der Ausführungsform nach der Fig. 1 ein an einem Arm 417 ausgebildeter Haken 418 gegenüber. Innerhalb der Arme 417 ist ein zylindrischer Kolben 424 angeordnet, der in axialer Richtung verschiebbar ist. An einem Ringkörper 416, an dem die Arme 417 vorhanden sind, ist ein Außengewinde 428 vorgesehen. In das Außengewinde 428 greift ein an einer Überwurfmutter 440 vorhandenes Innengewinde 441 ein. Die Überwurfmutter 440 weist eine hohlzylindrische Verlängerung 445 auf, in der eine radiale Nut 446 ausgebildet ist. In der Nut wird ein Bolzen 444 geführt, der mit dem Kolben 424 in Verbindung steht.

Durch Drehen der Überwurfmutter 440 wird diese durch die Wirkung des Schraubengewindes in axialer Richtung verschoben, wobei der in die Nut 446 eingreifende Bolzen 444 in axialer Richtung mitgenommen wird und zu einer Bewegung des Kolbens 424 gegenüber den Haken 418 führt. Dabei werden die Arme seitlich ausgelenkt, so daß die Haken in Eingriff mit dem Profil gelangen und in dieser Eingriffsstellung von dem Kolben 424 arretiert werden.

Aufspannvorrichtungen gemäß den Figuren 4 bis 7, 12 und 13 eignen sich als Gestängekupplungen, insbesondere bei hauptsächlich in axialer Richtung auftretenden Kräften.

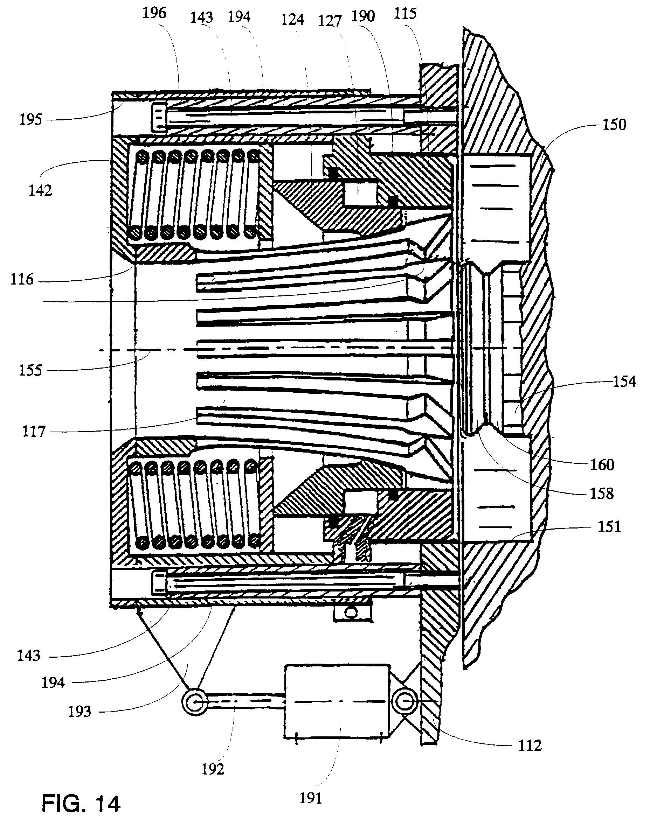

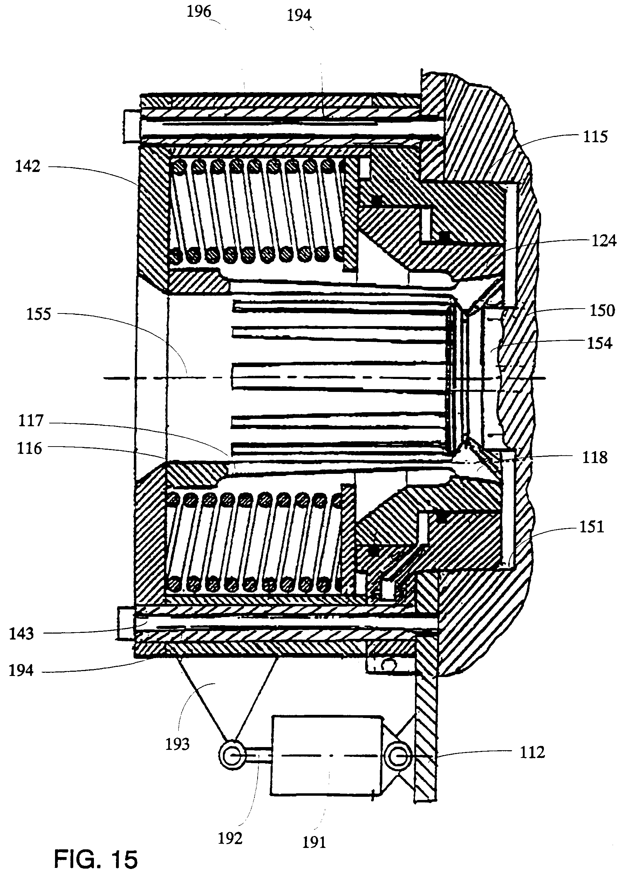

Eine weitere Ausführungsform der erfindungsgemäßen Aufspannvorrichtung, die eine Abwandlung der in den Fig. 4 und 5 gezeigten Ausführungsform darstellt, ist in den Fig. 14 und 15 gezeigt. Diese hier gezeigte abgewandelte Ausführungsform unterscheidet sich von der Ausführungsform nach der Fig. 4 bzw. 5 dadurch, daß das an der Aufspannplatte 112 angebrachte Spannelement gegen das an dem Formteil 150 vorgesehene Profilteil 154 verschiebbar ist. Außerdem ist das Profilteil 154 an dem Formteil 150 in einer in dem Profilteil 150 vorgesehenen Ausnehmung 151 derart vorgesehen, daß keine über die der Aufspannplatte 112 zugewandte Fläche des Formteils 150 vorstehenden Teile auftreten. Die abgewandelte Ausführungsform des Spannelements weist einen an den Durchmesser der Zentrieröffnung in der Aufspannplatte 112 angepaßten, teilweise darin aufgenommenen Spannelementkörper 115 auf, der beispielsweise in der gezeigten Ausführungsform mit äußeren Gleitflächen 190 versehen ist, die bei einer Verschiebung des Spannelements in Richtung des Profilteils eine Führung des Spannelements in der Zentrierausnehmung in der Aufspannplatte 112 bewirken. Weiter steht der Spannelementkörper 115 mit einem Gehäuseteil 196 in Verbindung, das zusammen mit der Endplatte 142 die Federn, den Ringkörper 116 mit dem länglichen Träger 117 und das Verriegelungsteil 124 einschließt, um eine abgeschlossene Einheit zu bilden. Das Gehäuseteil 196 kann beispielsweise zusammen mit dem Spannelementkörper 115 ein integrales, aus einem Werkstück gefertigtes Teil sein. In dem Gehäuseteil 196 sind Bohrungen 195 ausgebildet. In den Bohrungen 195 sind über Schraubverbindungen 143 an der Aufspannplatte 112 befestigte Schiebehülsen 194 vorgesehen, an denen das Gehäuseteil 196 und somit die gesamte Einheit des Spannelements gleitend verschiebbar ist. Die Schiebehülsen 194 wirken gemeinsam mit den Gleitflächen 190 als Führung für das Spannelement, könnten diese Funktion aber bei anderer Gestaltung des Spannelementkörpers 115 auch alleine übernehmen. Die senkrecht zur Aufspannplatte angebrachten Schiebehülsen 194 ermöglichen eine Verschiebung des Spannelementes in Richtung der Achse 155.

Das Gehäuseteil 196 steht über eine Befestigung 193 mit einem Kolben 192 in Verbindung, der über einen an der Aufspannplatte 112 angebrachten Hydraulikzylinder 191 verschiebbar ist. Eine hydraulische Betätigung des Kolbens 192 bewirkt somit eine Verschiebung des Spannelements entlang der durch die Schiebehülsen 194 ermöglichten Bewegungsrichtung. Anstelle des außenliegenden Zylinders 191 mit einem Kolben 192 wäre auch eine integrierte, innerhalb des Spannelements liegende Anordnung möglich. Anstelle einer Verschiebung des Spannelements wäre es auch denkbar, das Profilteil 154 an dem Formteil 150 verschiebbar zu gestalten. Außerdem wäre eine Ausführungsform denkbar, die sowohl ein verschiebbares Spannelement als auch ein dagegen verschiebbares Profilteil aufweist. Wie in den vorherigen Ausführungsformen wäre wieder eine Abwandlung der gezeigten Ausführungsform mit einer Hakenrückzugsvorrichtung möglich. Ebenso ließe sich die in der Fig. 14 gezeigte technische Abwandlung zur Schaffung einer Verschiebbarkeit des Spannelements auch in der in der Fig. 1 und 2 gezeigten Ausführungsform vorsehen.

Während in der Fig. 14 das Spannelement im gegen das Profilteil 154 zurückgezogenen Zustand gezeigt ist, zeigt die Fig. 15 das Spannelement im gegen das Profilteil ausgefahrenen Zustand, wobei zudem die Haken 118 im Eingriff mit dem Profil des Profilteils 154 stehen und durch das zusätzlich gegen das Profilteil verschobene Verriegelungsteil 124 in ihrer Eingriffslage festgelegt sind.

Die in den Fig. 14 und 15 gezeigte Abwandlung mit gegenüber dem Profilteil verschiebbarem Spannelement bietet den großen Vorteil, daß eine Anbringung des Formteils an der Aufspannplatte möglich ist, ohne daß an einem der beiden Teile über die einander gegenüberliegenden Flächen vorstehende Abschnitte auftreten. Insbesondere beim Ein- bzw. beim Ausbau von sehr schweren Formteilen bzw. Werkzeugen an Spritzgießmaschinen wird dadurch eine erheblich erleichterte und verbesserte Manövrierbarkeit der Werkzeuge beim Werkzeugwechsel ermöglicht, wodurch einerseits der Werkzeugwechsel schneller ausführbar ist und andererseits Beschädigungen der Werkzeuge bzw. der Aufspannplatte weitgehend vermieden werden.

Die im vorhergehenden in den Figuren 1 bis 15 gezeigten Ausführungsformen weisen den Vorteil einer Minimierung der Einflüsse von Temperaturschwankungen auf. Da die Hakenarme in der arretierten Stellung unter einer vorgespannten Verformung gehalten werden, wirken sich Temperatureinflüsse aus der Umgebung nur gering auf die Spannkraft aus.

Weiter weisen die erfindungsgemäßen Aufspannvorrichtungen einen Vorteil durch ihr geringes Bauvolumen auf. Die konstruktive Anordnung und insbesondere die gelenklose Ausführung der Arme bewirken ein geringes Bauvolumen und geringe Fertigungskosten. Da die Arme flexibel auslenkbar sind, ist eine Montage der einzelnen Teile des Spannelements problemlos möglich. Die einzelnen Komponenten der Aufspannvorrichtung bestehen im wesentlichen aus Drehteilen, die kostengünstig und präzise hergestellt werden können. Die Spannarme werden aus einem gedrehten konischen, mit den für die Haken geeigneten Flächen versehenen Hohlzylinder durch radiale Einschnitte gefertigt. Zur genauen Anpassung an das Profil werden die Haken in der ausgelenkten Stellung nachbearbeitet.

Durch das Vorsehen einer Vielzahl von Armen mit daran ausgebildeten Haken ist eine Funktionssicherheit des Spannelements auch bei Bruch eines Hakenarms gewährleistet.

Die in den Figuren 1 und 2 gezeigte Ausführungsform ermöglicht ein Aufspannen eines Formteils unter gleichzeitiger Zentrierung. Es ist in diesem Fall nur eine einzige Aufspannvorrichtung zum Anbringen eines Formteils an einer Aufspannplatte notwendig.

Andererseits könnten mehrere Aufspannvorrichtungen, beispielsweise gemäß der in den Figuren 4 und 5 bzw. den Figuren 6 und 7 gezeigten Ausführungsform, beispielsweise an den Eckpunkten einer Werkzeuggrundplatte angebracht werden, wodurch eine Schnellbefestigung mit gleichzeitiger Justierung und einer Festlegung der Winkellage des Werkzeugs bezüglich der Aufspannachse möglich wäre.

Sämtliche gezeigten Aufspannvorrichtungen haben den Vorteil, daß die an dem Formteil, dort insbesondere an der Werkzeuggrundplatte, vorzusehenden Profilteile einen sehr geringen Überstand aufweisen. Dadurch wird eine leichte Manövierbarkeit der gelegentlich sehr schweren Formteile bei der Anbringung an die Aufspannplatten und eine volle Ausnützung des maximal verfügbaren Raums zwischen den Aufspannplatten ermöglicht.

Die erfindungsgemäße Aufspannvorrichtung eignet sich neben Spritzgießmaschinen auch für andere mit Wechselwerkzeugen versehene Vorrichtungen, beispielsweise für Pressen oder Stanzen. Bestehende ältere Maschinen können leicht mit dem erfindungsgemäßen Aufspannsystem nachgerüstet werden, da nach erfolgter einmaliger Umrüstung der Maschine die zugehörigen Werkzeuge leicht und kostengünstig mit den erforderlichen Aufspannringen versehen werden können.

**Patentansprüche**

1. Aufspannvorrichtung für eine Spritzgießmaschine zur lösbaren Befestigung eines Formteils an einer Aufspannplatte mit einem entweder an der Aufspannplatte oder dem Formteil vorgesehenen Profilteil (50) und einem an dem jeweils anderen Teil vorgesehen Spannelement (10) mit gegen das Profilteil beweglichen Eingriffsteilen, die mit dem Profilteil in Eingriff bringbar sind, **dadurch gekennzeichnet,** daß die Eingriffsteile einen oder mehrere mit dem Profil des Profilteils (50) in Eingriff bringbare längliche Träger (17) aufweisen, und daß ein längs der Träger verschiebbares Verriegelungsteil (24) vorgesehen ist, mit dem die Träger im Eingriff mit dem Profilteil festlegbar sind.

2. Aufspannvorrichtung nach Anspruch 1, **dadurch gekennzeichnet,** daß die Träger (17) quer zu ihrer Längsrichtung auslenkbar sind und daß eine Querauslenkung quer zur Bewegungsrichtung des Verriegelungsteils gerichtet ist.

3. Aufspannvorrichtung nach Anspruch 2, **dadurch gekennzeichnet,** daß die Träger elastisch verformbar ausgebildet sind.

4. Aufspannvorrichtung nach Anspruch 3, **dadurch gekennzeichnet,** daß sich die Träger in der Eingriffsstellung in einem im wesentlichen biegespannungsfreien Zustand befinden.

5. Aufspannvorrichtung nach einem der Ansprüche 2 bis 4, **dadurch gekennzeichnet,** daß am Verriegelungsteil und/oder den Eingriffsteilen (17) derart ausgebildete Gleitflächen (19) vorgesehen sind, daß eine Bewegung des Verriegelungsteils eine Auslenkung der Eingriffsteile quer zur Bewegungsrichtung des Verriegelungsteils bewirkt.

6. Aufspannvorrichtung nach Anspruch 4 und Anspruch 5, **dadurch gekennzeichnet,** daß eine Auslenkeinrichtung (580) vorgesehen ist, mit der die Träger in die den Eingriff der Eingriffsteile freigebende Stellung quer zu ihrer Längsrichtung auslenkbar sind.

**7.** Aufspannvorrichtung nach einem der Ansprüche 2 bis 6, **dadurch gekennzeichnet,** daß an dem Verriegelungsteil und den Eingriffsteilen in einer Verriegelungsstellung aneinander angrenzende Reibflächen (22, 46) derart vorgesehen sind, daß das Verriegelungsteil in einer Verriegelungsstellung durch eine zwischen den Reibflächen wirkende Reibungskraft sperrbar ist.

**8.** Aufspannvorrichtung nach einem der Ansprüche 1-7, **dadurch gekennzeichnet,** daß das Profilteil und die Eingriffsteile im wesentlichen rotationssymmetrisch ausgebildet sind.

**9.** Aufspannvorrichtung nach einem der Ansprüche 1 bis 8, **dadurch gekennzeichnet,** daß eine zwischen dem Verriegelungsteil und den Eingriffsteilen in Richtung einer gegenseitigen Verschiebung wirkende Federvorrichtung (40) vorgesehen ist.

**10.** Aufspannvorrichtung nach Anspruch 9, **dadurch gekennzeichnet,** daß die Federvorrichtung (40) gegen die den Eingriff der Eingriffsteile festlegende Stellung des Verriegelungsteils vorgespannt ist.

**11.** Aufspannvorrichtung nach einem der vorhergehenden Ansprüche, **dadurch gekennzeichnet,** daß die Eingriffsteile in einer Eingriffsstellung bezüglich des Verriegelungsteils außenliegend angeordnet sind.

**12.** Aufspannvorrichtung nach einem der vorhergehenden Ansprüche, **dadurch gekennzeichnet,** daß die Eingriffsteile in einer Eingriffsstellung bezüglich des Verriegelungsteils innenliegend angeordnet sind.

**13.** Aufspannvorrichtung nach einem der vorhergehenden Ansprüche, **dadurch gekennzeichnet,** daß das Verriegelungsteil hydraulisch betätigbar ist.

**14.** Aufspannvorrichtung nach einem der vorhergehenden Ansprüche, **dadurch gekennzeichnet,** daß der Eingriff der Eingriffsteile in dem Profilteil formschlüssig ist.

**15.** Aufspannvorrichtung nach einem der vorhergehenden Ansprüche, **dadurch gekennzeichnet,** daß das Spannelement und das Profilteil jeweils einander zugeordnete Durchgangsöffnungen aufweisen.

**16.** Aufspannvorrichtung nach einem der vorhergehenden Ansprüche, **dadurch gekennzeich-**

**net,** daß die Eingriffsteile an Bereichen zwischen den Enden der Träger (317) ausgebildet sind, und daß die in eine Richtung weisenden Enden der Träger eine Führung (332) für das Profilteil bilden.

**17.** Aufspannvorrichtung nach einem der vorhergehenden Ansprüche, **dadurch gekennzeichnet,** daß das Spannelement und/oder das Profilteil gegeneinander verschiebbar sind.

**18.** Verwendung einer Aufspannvorrichtung nach einem der vorhergehenden Ansprüche an einer Spritzgießmaschine, **dadurch gekennzeichnet,** daß eine Aufspannvorrichtung zum gleichzeitigen Aufspannen und Zentrieren der Formteile gegen die Aufspannplatten vorgesehen ist.

**19.** Die Verwendung der Aufspannvorrichtung nach einem der Ansprüche 1 bis 17, **dadurch gekennzeichnet,** daß wenigstens zwei Aufspannvorrichtungen einer Aufspannplatte zugeordnet sind.

EP 0 687 540 A1

FIG.1

13

FIG.2

FIG.3

FIG. 4

FIG.5

FIG.6

FIG.7

123   118   119   117

154

160   159   158

FIG.8

123  118  119   117

154

160   159  158

FIG.9

123   118   119   117

154

160   159   158

FIG.10

FIG.11

FIG.12

FIG.13

FIG. 14

FIG. 15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | EP-A-0 025 995 (KRAUSS-MAFFEI)<br>* das ganze Dokument *<br>--- | 1,3,7,11 | B29C45/17 |
| Y | DE-A-31 00 854 (STROTHMANN)<br><br>* das ganze Dokument *<br>--- | 1,2,5,8,<br>12,15 | |
| Y | GB-A-603 194 (WARREN MCARTHUR CORP.)<br><br><br>* das ganze Dokument *<br>--- | 1,2,<br>5-10,12,<br>15 | |
| Y | EP-A-0 179 724 (VALLET)<br><br><br>* Seite 8, Zeile 28 - Seite 9, Zeile 15;<br>Abbildungen 13,14 *<br>--- | 1,2,5,6,<br>8-10,12,<br>13,15 | |
| Y | EP-A-0 488 872 (AEROSPATIALE)<br><br>* das ganze Dokument *<br>--- | 1-3,5,<br>8-10,12,<br>15 | |
| Y | DE-A-38 17 109 (MÜLLER)<br><br>* das ganze Dokument *<br>--- | 1,2,5,<br>8-10,12,<br>13,15 | RECHERCHIERTE SACHGEBIETE (Int.Cl.6)<br><br>B29C<br>B30B<br>F16B<br>B21D<br>B23B |
| Y | FR-A-2 155 486 (W.A. WHITNEY CORP.)<br><br>* das ganze Dokument *<br>--- | 1,2,5,8,<br>12,15 | |
| Y | GB-A-1 206 411 (BALDING)<br><br>* das ganze Dokument *<br>----- | 1-3,8,<br>11,13,15 | |

Der vorliegende Recherchenbericht wurde für alle Patentansprüche erstellt

| Recherchenort | Abschlußdatum der Recherche | Prüfer |
|---|---|---|
| DEN HAAG | 15. November 1994 | Bollen, J |